(19) Europäisches Patentamt
European Patent Office
Office européen des brevets

(11) **EP 2 067 378 B1**

(12) **EUROPÄISCHE PATENTSCHRIFT**

(45) Veröffentlichungstag und Bekanntmachung des Hinweises auf die Patenterteilung:
**18.11.2009 Patentblatt 2009/47**

(21) Anmeldenummer: **07802299.3**

(22) Anmeldetag: **13.09.2007**

(51) Int Cl.:
**H05B 7/148** (2006.01)

(86) Internationale Anmeldenummer:
**PCT/EP2007/007982**

(87) Internationale Veröffentlichungsnummer:
**WO 2008/034556 (27.03.2008 Gazette 2008/13)**

(54) **VERFAHREN ZUM BETREIBEN EINES SCHMELZMETALLURGISCHEN OFENS UND OFEN**

METHOD FOR OPERATING A MELT-METALLURGIC FURNACE, AND FURNACE

PROCÉDÉ POUR FAIRE FONCTIONNER UN FOUR DE MÉTALLURGIE DE FUSION ET FOUR

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **18.09.2006 DE 102006044351**
**28.09.2006 DE 102006046274**
**03.09.2007 DE 102007041632**

(43) Veröffentlichungstag der Anmeldung:
**10.06.2009 Patentblatt 2009/24**

(73) Patentinhaber: **SMS Siemag AG**
**40237 Düsseldorf (DE)**

(72) Erfinder:
• **SCHUBERT, Manfred**
**46147 Oberhausen (DE)**

• **KRÜGER, Klaus**
**22179 Hamburg (DE)**
• **DORNDORF, Markus**
**22145 Hamburg (DE)**

(74) Vertreter: **Klüppel, Walter**
**Hemmerich & Kollegen**
**Patentanwälte**
**Hammerstraße 2**
**57072 Siegen (DE)**

(56) Entgegenhaltungen:
**EP-A- 0 668 711      EP-A- 0 851 325**
**DE-A1- 19 636 279    JP-A- 7 120 160**
**JP-A- 10 038 242     US-A- 5 205 979**
**US-A- 5 930 284**

**Beschreibung**

Die Erfindung betrifft ein Verfahren zum Betreiben eines schmelzmetallurgischen Ofens, insbesondere eines Lichtbogenofens, bei dessen Betrieb eine Anzahl Betriebsparameter innerhalb vorgegebener, gegebenenfalls zeitvarianter Grenzen gehalten werden, wobei hierfür eine Steuerung- oder Regelungseinrichtung zur Anwendung kommt. Des weiteren betrifft die Erfindung einen schmelzmetallurgischen Ofen, insbesondere einen Lichtbogenofen.

In einem schmelzmetallurgischen Ofen der genannten Art wird Metallschrott mittels elektrischer Energie eingeschmolzen. Dieser Prozess ist Bestandteil der Stahlerzeugung. Dabei sind meist eine Anzahl Lichtbögen vorhanden, die zwischen Elektrodenspitzen und dem Schmelzgut brennen, die die für den Schmelzprozess erforderliche Wärme in Form von thermischer Energie zur Verfügung stellen.

Für eine effiziente und energiesparende Stahlherstellung müssen Stoff- und Energieflüsse optimal eingestellt werden. Hierfür sind Steuerungs- und Regelungsanlagen bekannt, die die eingangs erwähnten Öfen steuern bzw. regeln. Beispiele hierfür sind in der US 5 205 979, in der WO 02/28146 A1, in der DE 197 11 453 A1, in der EP 0 036 122 B1, in der DE 44 15 727 A1, in der WO 02/063927 und in der WO 99/23264 beschrieben.

Zur Realisierung eines bezüglich Energiebedarf und Produktivität effizienten Ofenbetriebes können folgende Stellgrößen im Schmelzverlauf prozessabhängig vorgegeben werden:

- Stromstärke eines jeden Lichtbogens und die Außenleiter- bzw. Gleichspannung,
- Drosselreaktanz,
- Erdgas- und Sauerstoffvolumenstrom eines jeden Brenners,
- Volumenstrom des zur Nachverbrennung zugeführten Sauerstoffs,
- Sauerstoffvolumenstrom und Feinkohlenmengenstrom eines jeden Injektors zur Schaumschlackengenerierung,
- Förderrate des direktreduzierten Eisens,
- Förderrate des kontinuierlich zugegebenen Schrottes und
- Förderrate des flüssigen Roheisens.

Die Vorgabe der Werte erfolgt heute meist in der Form von Steuerungen in Abhängigkeit von der Zeit seit Schmelzbeginn oder der eingebrachten Energie. Da dies dem Prozess nur bedingt gerecht wird, sind manuelle Eingriffe bzw. generell manuelle Vorgaben an der Tagesordnung.

Darüber hinaus gibt es Ansätze, einzelne der genannten Stellgrößen abhängig vom Prozesszustand zu regeln. Die Beschreibung des Prozesszustandes erfolgt dabei unter anderem über verschiedenste Kühlwassertemperaturen, die Schallemission des Ofens, die Abgaszusammensetzung und verschiedene elektrische Kennwerte wie beispielsweise den Stromklirrfaktor. Die zugehörigen Regler sind in Form klassischer Regler, als Kennfeldregler oder als neuronale Netze aufgebaut. Typisches Kennzeichen bestehender Regler ist, dass die jeweilige einzelne Regelaufgabe isoliert betrachtet wird. Die Benutzerschnittstellen (HMI) sind folglich entsprechend spezifisch und uneinheitlich ausgeführt. Hinzu kommt, dass die Einstellung der Parameter bekannter Regelansätze fundiertes regelungstechnisches Knowhow erfordert. Dies erschwert die betriebliche Optimierung erheblich. Angesichts längerfristiger Prozessschwankungen, wie sie beispielsweise aus der Schrottqualität oder dem Produktionsspektrum resultieren, erfordert ein effizienterer Betrieb jedoch gerade diese Optimierung.

Bei bekannten Steuerung- bzw. Regelungseinrichtungen ist es somit nachteilig, dass eine geringe Transparenz des Aggregats gegeben ist. Bislang wird bevorzugt im manuellen oder nur teilautomatisierterm Betrieb gearbeitet. Es gibt damit nur einen gesteuerten Einsatz von Ressourcen (Betriebsstoffe und Zeit) und bislang keine ganzheitliche Betrachtung des Schmelzprozesses.

Die Regelungen existieren zudem bislang nur für Teilsysteme, z. B. für die Brennersteuerung und für die Schaumschlackenregelung.

Damit liegt kein optimaler Einsatz von Energie vor. Ferner ist ein relativ hoher administrativer Aufwand für eine gleich bleibende höhe Produktivität der Anlage erforderlich.

Schließlich gibt es ein erhöhtes Risiko wegen Betriebsstörungen und Ausfallzeiten, welche daraus resultieren, dass erforderliche manuelle Eingriffe nicht rechtzeitig oder in ungeeigneter Weise ausgeführt werden.

Der Erfindung liegt daher die Aufgabe zugrunde, ein Verfahren zum Betreiben eines schmelzmetallurgischen Ofens, insbesondere eines Lichtbogenofens, sowie einen Ofen vorzuschlagen, mit dem die genannten Nachteile vermieden oder zumindest herabgesetzt werden. Damit soll eine verbesserte Effizienz erzielt werden, d. h. ein ökonomischerer Einsatz der Ressourcen und eine optimal geringe Verfahrenszeit. Es soll damit ein Prozessleitsystem zur ganzheitlichen Erfassung und Regelung des Schmelzprozesses eines Elektrolichtbogenofens zur Verfügung gestellt werden.

Die Lösung dieser Aufgabe durch die Erfindung ist verfahrensgemäß dadurch gekennzeichnet, dass die Steuerungs- oder Regelungseinrichtung eine konventionelle Steuerung oder Regelung und eine Fuzzy-Regelung aufweist, die jeweils ihre Stellgrößen an mindestens einen programmierbaren Mediator leiten, wobei der mindestens eine Mediator das zur Anwendung kommende Stellsignal gemäß einem vorgegebenen Gewichtungsfaktor aus der von der konventionellen Steuerung oder Regelung und der von der Fuzzy-Regelung stammenden Stellgröße errechnet.

Der Mediator kann grundsätzlich sowohl die Stellgröße einer Steuerung (Level 1 - System) und einer konventionellen Regelung verknüpfen als auch die einer Steuerung und einer Fuzzy-Regelung.

Alle zum Einsatz kommenden Einzelkomponenten sind dabei gleichartig aufgebaut (mit einheitlichem HMI).

Der geregelte Betriebsparameter kann die Intensität eines Brenners sein, mit dem Material in dem Ofen erhitzt wird.

Er kann auch die Leistungsaufnahme eines Lichtbogens sein, mit dem Material in dem Ofen erhitzt wird.

Er kann auch die Reaktanz einer Zuführleitung einschließlich Drossel zu einem Lichtbogen sein, mit dem Material in dem Ofen erhitzt wird.

Er kann auch die Intensität eines Nachbrenners sein, mit dem Material in dem Ofen erhitzt wird.

Er kann auch ein Parameter sein, der mit der Menge an Schaumschlacke korreliert, die sich in dem Ofen befindet.

Er kann auch die Menge eines in ein Heizelement des Ofens eingebrachten Gases sein. Das Gas kann vorzugsweise Sauerstoff oder Erdgas sein.

Der geregelte Betriebsparameter kann auch die Menge des zugegebenen Eisens sein.

Jedem geregelten Betriebsparameter kann ein eigener Mediator zugeordnet sein.

Bevorzugt ist vorgesehen, dass mindestens zwei, vorzugsweise alle der geregelten Betriebsparameter in einem einheitlich zusammengefassten Regelsystem verarbeitet werden.

Der schmelzmetallurgische Ofen, insbesondere Lichtbogenofen, bei dessen Betrieb eine Anzahl Betriebsparameter mittels einer Steuerung- oder Regelungseinrichtung innerhalb vorgegebener Grenzen gehalten werden, ist erfindungsgemäß dadurch gekennzeichnet, dass die Steuerungs- oder Regelungseinrichtung eine konventionelle Steuerung oder Regelung und eine Fuzzy-Regelung aufweist, wobei beide Regelungen mit mindestens einem programmierbaren Mediator verbunden sind, der zur Berechnung des zur Anwendung kommenden Stellsignals gemäß einem vorgegebenen Gewichtungsfaktor aus der von der konventionellen Steuerung oder Regelung und der von der Fuzzy-Regelung stammenden Stellgröße geeignet ist.

Wesentliche Merkmale der vorgeschlagenen Lösung bestehen also darin, die Verwendung von Fuzzy-Logik in den zur Anwendung kommenden Regelalgorithmen vorzusehen und eine Verknüpfung von konventioneller und fuzzy-basierter Regelungstechnik über Mediatoren vorzunehmen. Dabei ist bevorzugt eine modulare Softwarearchitektur mit einem individuell gestaltbaren Reglerverband vorgesehen.

Das dafür entwickelte ganzheitliche Prozessleitsystem, das alle Stoff- und Energieflüsse betrachtet, berechnet aus dem Ist-Zustand des Ofens und den vorgegebenen Regelparametern die Ausgangsgrößen in bevorzugt sieben speziellen Regelalgorithmen: "Burner Control" (Brenner-Regelung), "Power-Control" (Leistungsregelung), "Reactor Control" (Drosselstufen-Regelung), "DRI-Control" (DRI-Regelung), "Post Combustion Control" (Nachverbrennungs-Regelung), "Foaming Slag Control" (Schaumschlacken-Regelung), "Oxygen Control" (Sauerstoff-Regelung, z. B. Jet). Diese Stellgrößen werden wieder an das System zurückgegeben.

Die Regelalgorithmen basieren dabei auf einer Kombination aus konventioneller Regelung und Fuzzy-Regelung, wobei diese über die genannten Mediatoren, die algorithmus-spezifisch frei wähl- und konfigurierbar sind, miteinander verknüpft werden. Damit kann in optimierter Weise ein Elektrolichtbogenofen gesteuert bzw. geregelt werden.

Der Mediator legt das anteilige Verhältnis (Gewichtung) zwischen konventioneller Regelung und Fuzzy-Regelung fest. Er hat eine ausschließende Wirkung bei der Einstellung 1 (keine Fuzzy-Regelung, nur konventionelle Reglung) bzw. bei der Einstellung 0 (keine konventionelle Regelung, nur Fuzzy-Regelung).

Eine modulare, flexible, objektorientierte und dynamische Softwarearchitektur erlaubt eine einfache Anpassung an jede Ofenkonfiguration über die Einstellung der Ofen- und Regelparameter (Furnace Configuration und Control Data).

Der erweiterbare Reglerverbund kann aus bis zu sieben im Prozess zu- und abschaltbaren Regelalgorithmen bestehen, nämlich

- der "Power Control" (Leistungsregelung),

- der "Bumer Control" (Brenner-Regelung),

- der "Reactor Control" (Drosselstufen-Regelung),

- der "Post Combustion Control" (Nachverbrennungs-Regelung),

- der "Foaming Slag Control" (Schaumschlacken-Regelung),

- der "Oxygen Control" (Sauerstoffregelung) und

- der "DRI Control" (DRI-Regelung),

die über einen zentralen Controller initialisiert werden. Ein allgemeiner Fuzzy-Regler kann jeder Regelung spezifisch über einen Mediator angekoppelt werden.

Bevorzugt ist eine autonome Steuerung und Regelung jedes einzelnen Ofenelements (Erdgas-Sauerstoff-Brenner, Sauerstoff-Injektoren, Nachbrennersauerstoff-Injektoren, Kohlenstoff-Injektoren, DRI-Injektoren) vorgesehen, da für jedes Ofenelement spezifische Regelparameter definiert werden können. Weiterhin kann jedes einzelne Ofenelement (z. B. einer der Brenner) für sich ab- oder zugeschaltet werden.

Eine zentrale Ablaufsteuerung der Software erfolgt über einen Prozessmanager. Dieser initialisiert und überwacht die Teilsysteme und Aufgaben des Prozessleitsystems.

Eine flexible, erweiterbare und prozessunabhängige Anbindung von Anzeigefenstern (Views) und Log-Dateien (Stores) kann mittels Observer-Technik erfolgen.

Ein intuitiver und einfacher Aufbau der Anzeigefenster für die Prozessdatendarstellung des FEOS (Furnace Energy Optimizing System) und des FEOS-Control Data-Managers für die Parametrierung des Ofens und der Regeltemperatur ist gegeben.

Die Konfiguration von Regelparametern und der Ofenkonfiguration kann mittels eines unabhängigen Programms und der Speicherung der Konfiguration als XML-Datei erfolgen.

Die Prozessregelung arbeitet bevorzugt mit einer Taktzeit von weniger oder gleich 1 Sekunde.

Damit sind eine kontinuierliche Prozessüberwachung und eine definierte Reaktion auf entsprechende Prozessbedingungen über die Analyse der thermischen Gefäßbelastung, der Schallemission, der Stromschwankungen, der aktuellen elektrischen Größen und der Abgasemission gegeben.

Das Prozessleitsystem basiert auf einer modernen objektorientierten Softwarearchitektur, ist modular aufgebaut und bietet die Möglichkeit, Teilsysteme bzw. Teil-Regelungen im Prozess zu- oder abzuschalten und ist durch die flexible Struktur leicht erweiterbar.

Das System hat überwachenden Charakter und ist mit bestehenden Level1-Systemen kombinierbar. Es integriert und verarbeitet Daten von neuen Technologien zur Abgasanalyse und Schallmessung.

In vorteilhafter Weise ergibt sich durch den ganzheitlichen Ansatz und die Betrachtung aller Stoff- und Energieflüsse ein Programm, das alle bisherigen Steuer- und Regelkonzepte in einem System vereint. Es bindet die Vorgaben aus dem Level1-System des Operators in der Leitwarte und des Prozessingenieurs ein.

Das System ist nach den modernsten Verfahren der Steuerungs- und Regelungstechnik sowie Softwareentwicklung (Modularität, Erweiterbarkeit, Entkopplung von Visualisierung und Datenverarbeitung) entworfen und mit der aktuellsten Software (C#) programmiert, was den zukunftsfähigen Charakter des Systems unterstreicht.

Die autonome Architektur des Systems ermöglicht den Einsatz in jedem Stahlwerk für Drehstromlichtbogenöfen. Es ist über eine SPS mit dem Stahlwerk verbunden, eine softwareseitige Anpassung ist nicht notwendig. Dies wird ausschließlich über die Parameterkonfiguration für die Ofenelemente und die Regelparameter vorgenommen.

Das vorgeschlagene System bietet auf einer Plattform eine automatische Anpassung der Stellgrößen an den aktuellen Prozesszustand, ermöglicht einen optimierten Einsatz von elektrischer Energie, chemischen Zusätzen (wie Feinkohle und Sauerstoff) und gewährleistet so eine höhere Transparenz des Schmelzprozesses. Dies führt zu einer Entlastung des Bedienpersonals, zu einer Verringerung von Betriebsstörungen und Ausfallzeiten sowie zur Verminderung des Unfallrisikos.

Durch die Verbindung mit bestehenden Level1-Systemen und der einfachen Anpassbarkeit an neue Anlagenkonfigurationen wird gleichzeitig der administrative Aufwand gesenkt.

Daraus folgen eine Senkung der Prozesskosten und eine Zeitminimierung pro t Stahl, was einen Kosten- und damit Wettbewerbsvorteil bedeutet. Eine gleich bleibend hohe Produktivität bei geringerem Energieeinsatz kann damit erzielt werden.

In der Zeichnung sind Ausführungsbeispiele der Erfindung dargestellt. Es zeigen:

Fig. 1      schematisch den Aufbau einer Regelung eines Elektrolichtbogenofens;

Fig. 2      einen Screen-Shot des Bildschirms der Regelvorrichtung für die Regelung der Leistung;

Fig. 3      einen Screen-Shot des Bildschirms der Regelvorrichtung für die Regelung des Brenners;

Fig. 4      das Schema einer Reglerarchitektur, aus dem insgesamt sieben geregelte Betriebsparameter ersichtlich sind;

Fig. 5      das Schema einer Reglerarchitektur bzw. Softwarearchitektur;

Fig. 6      schematisch die funktionale Beschreibung der im Ofen stattfinden- den Prozesse und die Definition von Fuzzy-Elementen; und

Fig. 7      schematisch die Einbindung des Regelungssystems des Ofens in eine Umgebung.

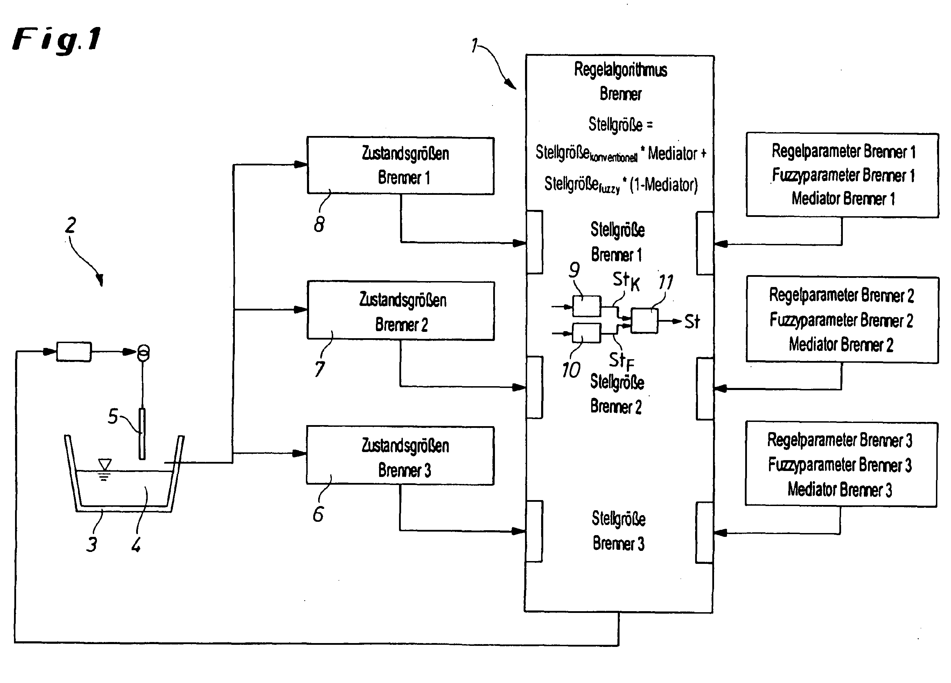

In Fig. 1 ist schematisch der Aufbau einer Regelung 1 zur Regelung eines Elektrolichtbogenofens 2 skizziert. In einem Gefäß 3 befindet sich aufzuschmelzendes Metall 4. Mittels einer Elektrode 5 wird elektrische Energie in den Ofen eingebracht und damit das Metall aufgeschmolzen.

Der Ofen 2 dient zur Wiedergewinnung von Stahl aus Stahlschrott, wobei neben Schrott auch direktreduziertes Eisen und Roheisen mit eingesetzt werden kann. Mit einem Anteil von 35 % an der Weltstahlerzeugung hat der Ofen erhebliche wirtschaftliche Bedeutung.

Eingeschmolzen wird das Einsatzgut im wesentlichen durch Wechselstrom- oder Gleichstrom-Lichtbögen. Typischerweise geschieht dies im Batch-Prozess. Es ist auch möglich, vor oder nach dem Chargieren des Schrottes flüssiges Roheisen in den Ofen zuzugeben oder den Schrott bzw. direktreduziertes Eisen kontinuierlich zuzuführen. Die Einschmelzleistung ist durch die Stromstärke und die Lichtbogenspannung bestimmt. Die Stromstärke ist prinzipiell innerhalb der anlagen- und prozessspezifischen Grenzen frei wählbar, ebenso die Lichtbogenspannung des Gleichstrom-Elektrolichtbogenofens. Beim Drehstrom-Elektrolichtbogenofen ist die Lichtbogenspannung in Stufen vorgebbar, welche durch das Transformatorlayout bestimmt sind. Generelles Ziel ist es, die Parameter so zu wählen, dass eine hohe Produktivität und ein niedriger Energiebedarf erzielt werden. Dieses Optimum ist anlagenspezifisch und es hängt erheblich vom aktuellen Prozesszustand ab.

Ein weiterer im Prozessverlauf dynamisch veränderbarer elektrischer Parameter ist durch die Vorreaktanz gegeben, zumindest soweit diese durch eine unter Last schaltbare oder stufenlos regelbare Drosselspule realisiert ist. Eine hohe Reaktanz führt zur Beruhigung des Ofenganges, eine niedrige zu einer hohen verfügbaren Lichtbogenspannung.

Neben der über die Lichtbögen eingebrachten elektrischen Energie kommen zahlreiche Hilfsenergien zum Einsatz. Diese spielen bei einem modernen Elektrolichtbogenofen eine erhebliche Rolle.

Zunächst sind hier die Erdgas-Sauerstoff-Brenner (oder generell auch Brennstoff- Sauerstoff-Brenner) zu nennen. Diese Brenner sind am Umfang des Ofengefäßes angebracht, sie unterstützen während des ersten Prozessabschnittes das Niederschmelzen des Schrotthaufwerkes. Generell stellen die Brenner zu diesem Zeitpunkt eine sehr effiziente Art der Energienutzung dar. Die optimale Einsatzdauer und -leistung sind dabei von der Konsistenz des Schrotthaufwerkes im jeweiligen Brennerbereich bestimmt. Das zugehörige Optimum ist damit sowohl anlagenspezifisch als auch von der aktuellen Chargierung abhängig.

Eine weitere Energiequelle ist mit der Atmosphäre innerhalb des Ofengefäßes gegeben. Diese kann erhebliche Anteile an Kohlenmonoxid, Methan und Wasserstoff enthalten. Über die Injektion von Sauerstoff ist die darin enthaltene chemische Energie nutzbar. Zum einen kann die Sauerstoffmenge über die Stöchiometrie der bereits erwähnten Brenner gesteuert werden, zum anderen sind ggf. separate, so genannte Post-Combustion Sauerstoff-Injektoren im oberen Bereich des Ofens vorhanden. Der optimale Betriebspunkt dieser Injektoren ist von der Zusammensetzung der Ofenatmosphäre und dem thermischen Zustand des Ofengefäßes, insbesondere des Gefäßdeckels und des Abgaskrümmers, abhängig. Zu beachten ist dabei, dass sich die Zusammensetzung der Ofenatmosphäre innerhalb kurzer Zeit erheblich verändern kann.

Als weiterer wichtiger Faktor des Energieeinbringens ist die Injektion von Sauerstoff und Feinkohle in das Stahlbad zu nennen. Diese geschieht über Lanzenmanipulatoren und/oder Ultraschall-Injektoren. Neben metallurgischen Aspekten dient die Zuführung von Feinkohle und Sauerstoff insbesondere zum Aufbau von Schaumschlacke, d. h. die auf dem Stahlbad schwimmende Schlacke wird durch resultierende Kohlenmonoxidblasen auf das Zehn- bis Zwanzigfache ihres ursprünglichen Volumens aufgeschäumt. Damit ist auch bei flüssigem Stahlbad ein gutes Einhüllen der Lichtbögen und damit ein guter Energieübergang zur Schmelze gewährleistet. Neben dem Einblasen einer jeweils geeigneten Menge an Sauerstoff und Feinkohle spielt die Schlackenzusammensetzung und ihre Viskosität eine wichtige Rolle bei der Entstehung von Schaumschlacke.

Als letzter energetisch interessanter Stofffluss ist die Zugabe von direktreduziertem Eisen zu nennen. Es bietet sich an, dieses bei flüssigem Stahlbad kontinuierlich zuzugeben. Die optimale Förderrate ist dadurch gekennzeichnet, dass die Temperatur von Stahlbad und Schlacke während des Förderzeitraumes auf einem konstanten, für die Schaumschlackenbildung geeigneten Temperaturniveau gehalten wird. Weiterhin ist zu beachten, dass sich die im direktreduzierten Eisen enthaltene, variierende Kohlenstoffmenge auf die Schaumschlackenbildung auswirkt.

Mit Blick auf Fig. 1 ist weiterhin folgendes festzustellen:

Die Regelung 1 erhält von (nicht dargestellten) Brennern bei 6, 7, 8 die Zustandsgrößen als Ist-Werte. Die Regelung 1 weist mindestens zwei nur sehr schematisch angedeutete Regeleinheiten 9 und 10 auf, nämlich eine erste konventionelle Regelung 9 und eine zweite Fuzzy-Regelung 10. Beide Regelungen geben in Abhängigkeit der in ihnen hinterlegten Algorithmen Stellgrößen $St_K$ bzw. $St_F$ aus, die in einen Mediator 11 gelangen.

Der Mediator 11 berechnet die tatsächlich zur Ausgabe gelangende Stellgröße St aus der Beziehung:

$$St = St_K \times F + St_F \times (1 - F),$$

mit: St: Stellgröße
$St_K$: Stellgröße gemäß konventioneller Regelung
$St_F$: Stellgröße gemäß Fuzzy-Regelung
F: Mediator-Faktor

Hierzu wird zunächst über ein Startfenster der gesamte Regelungsprozess gestartet. Dabei wird ein Prozess-Timer abgerufen, der innerhalb einer Sekunde folgende Teilsysteme und Prozesse initialisiert und startet:

- Initialisierung des Prozess-Managers,
- Einlesen der Ofenkonfiguration aus XML-Daten,
- Einlesen der Prozess-Daten (Ist-Zustand des Ofens) aus SPS über einen OPC-Server,
- Einlesen der Regelparameter aus XML-Dateien,
- Initialisierung der Regelung 1 (Controller) und Start der Regelalgorithmen,
- Sequentielle Abarbeitung der Regelalgorithmen,
- Berechnung der Stellgrößen,
- Schreiben der Stellgrößen in die Prozess-Daten,

- Ausgabe der Stellgrößen an SPS über OPC-Server,
- Darstellung der Daten auf einer dynamischen Oberfläche (Views),
- Speicherung der Daten (Ist-Zustand, Stellgrößen) in Log-Dateien.

In der Reglung 1 (Controller) werden die Teilregelungen definiert und initialisiert. In Abhängigkeit der Ofenkonfiguration werden die Teilregelungen entsprechend der Anzahl der Ofenelemente gestartet.

Existieren - gemäß Ausführungsbeispiel nach Fig. 1 - in einem Ofen beispielsweise drei Brenner, wird der Regelalgorithmus drei Mal mit den zugehörigen spezifischen Regelparametern durchlaufen. In den Regelparametern (Control Data) sind die Fuzzy-Parameter, die konventionellen Regelparameter und die Mediatoren definiert. Als Ergebnis werden pro Prozessgröße drei unterschiedliche Stellgrößen für die drei Brenner berechnet.

Die Verknüpfung der Stellgrößen der konventionellen Regelungstechnik und der Fuzzy-Logik erfolgt über den Mediator 11 gemäß der obigen Formel.

Des weiteren ist neben der Wahl der zwischen konventioneller und fuzzybasierter Regelungstechnik das Zu- und Abschalten der Regelalgorithmen möglich, sowohl im Gesamten als auch spezifisch für ein einzelnes Ofenelement.

Die Verwendung der Fuzzy-Logik bietet die Möglichkeit, die Erfahrungen und spezifischen Kenntnisse des Prozessingenieurs und des Operators der Leitwarte in die konventionelle Regelbasis zu integrieren. Dadurch können Bereiche und Verhaltensweise des Ofens in die Regelungen eingebunden werden, die sich der direkten Messtechnik entziehen.

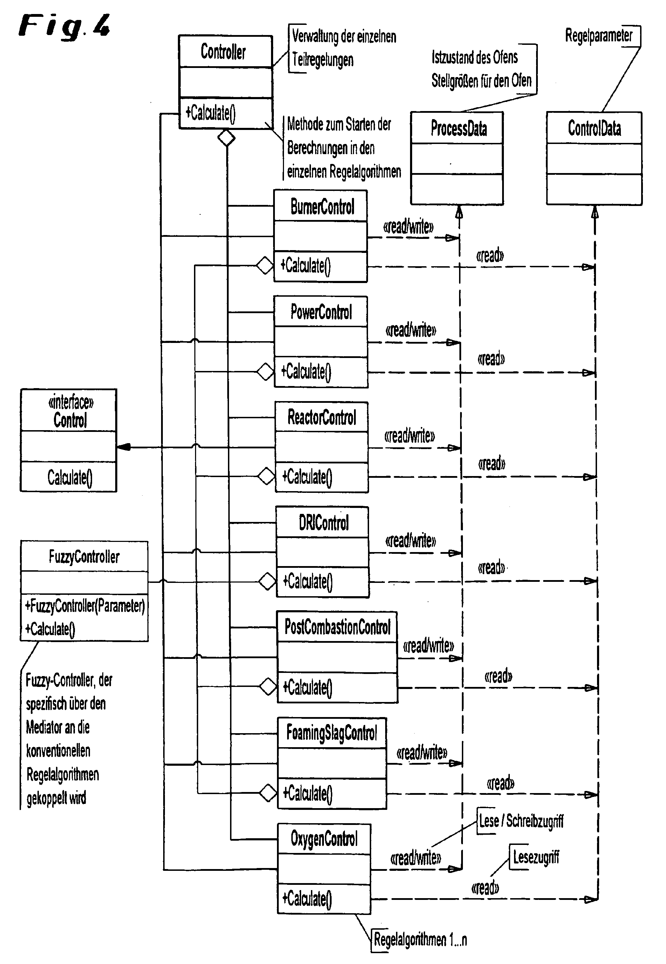

Der Zusammenhang der Regelalgorithmen ist aus Fig. 4 ersichtlich.

Bei der Software handelt es sich um ein modulares, autonomes, flexibles und dynamisches Softwarekonzept. Das Programm ist so strukturiert und aufgebaut, dass eine einfache Anpassung an jede Ofenkonfiguration über die Einstellung der Ofen- (Furnace Configuration) und Regelparameter (Control Data) möglich ist. Der modulare Charakter ermöglicht eine einfache Erweiterung, was sowohl die Regelalgorithmen, die Ofenparameter als auch die Prozessvisualisierung betrifft.

Die autonome Architektur des Systems ermöglicht den Einsatz in jedem Stahlwerk für Drehstromlichtbogenöfen. Es ist über eine SPS mit dem Stahlwerk verbunden, eine softwareseitige Anpassung ist nicht notwendig. Dies wird ausschließlich über die Parameterkonfiguration für die Ofenelemente und die Regelparameter vorgenommen.

Die dynamische Ausprägung des Programms ermöglicht

- eine einfache Anpassung des Systems einer neuen Ofenkonfiguration,
- den automatischen Aufbau der Algorithmen,

- die automatische Anpassung der Visualisierung des Prozesses und
- eine automatische Anpassung der Log-Dateien

auf der Basis der vorher definierten Ofenkonfiguration, ohne dass softwareseitige Anpassungen vorgenommen werden müssen.

Die Prozessdatendarstellung erfolgt nach den Prinzipien moderner, intuitiver und ergonomischer Oberflächengestaltungen (GUI-Design). Die Oberflächen zur Prozessdatendarstellung wurden also nach modernen Prinzipien der Oberflächengestaltung vorgenommen und beziehen die Anforderungen der Stahlwerker mit ein. Ziel ist es, mit möglichst wenigen Fenstern und Umschaltvorgängen eine maximale Information zur Verfügung zu stellen.

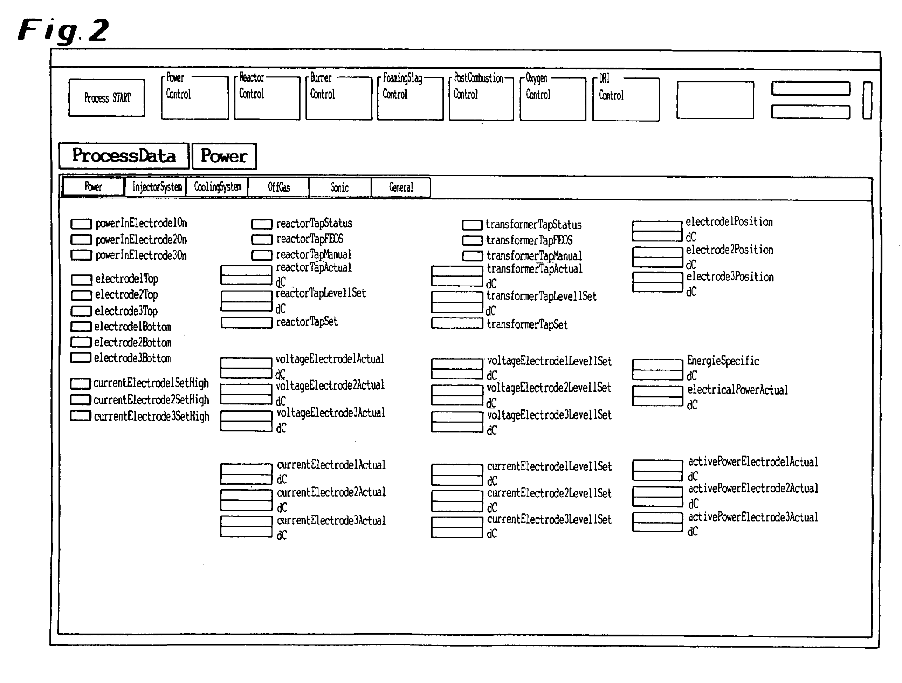

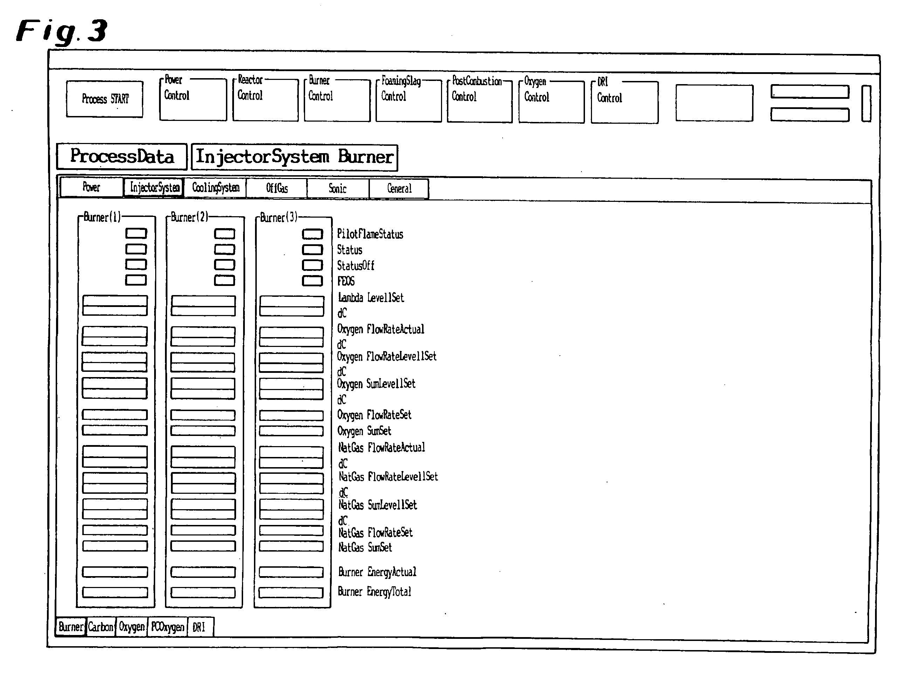

In Fig. 2 und Fig. 3 zeigen je einen Screen-Shot des Bildschirms der Regelvorrichtung einmal für die Regelung der Leistung ("Power") und einmal für die Brenner ("InjectorSystem Burner").

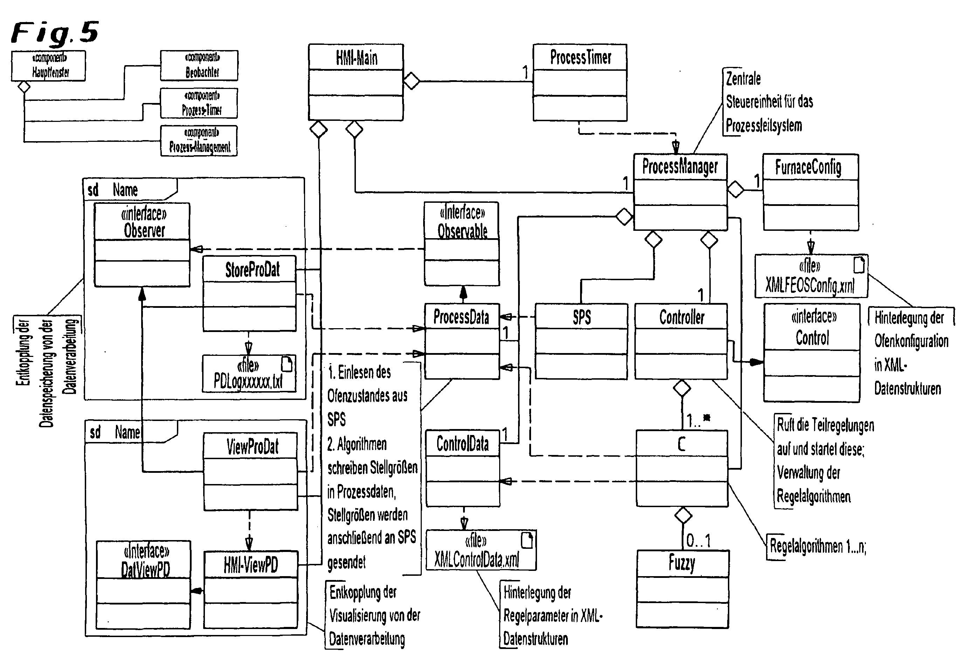

Zum Aufbau des Systems sei folgendes angemerkt (s. hierzu auch die Figuren 4 und 5, aus denen Schemata der Architektur der Regelung hervorgehen):

Process Timer / HMI-Main: Auf der Main-Form ist der Startbutton untergebracht, über den der Prozess über einen Timer gestartet und gestoppt wird. Weiterhin können neue Regelparameter im laufenden Prozess in das System übertragen werden, falls Anpassungen der Regelalgorithmen notwendig sind. Außerhalb der Main-Form sind keine weiteren Buttons zu betätigen, der Prozess läuft im Hintergrund, unabhängig vom Operator. Eingriffe des Bedieners sind generell von einer separaten Oberfläche (WiaCC-Oberfläche) aus möglich (HMI).

Process Manager: Der Prozessmanager ist das zentrale Steuerelement im System. Über ihn werden alle Aufgaben delegiert und gestartet. Er legt die Reihenfolge der Teilprozesse fest.

Controller: Im Controller (Regelung 1) werden alle Teilregelungen definiert und initialisiert. In Abhängigkeit der Ofenkonfiguration werden die Teilregelungen entsprechend der Anzahl der Ofenelemente durchlaufen. Die Ausnahme ist die Leistungsregelung (Power Control), Drosselstufenregelung (Reactor Control) und die Regelung der Eisenzugabe (DRI-Control), die im Ofen jeweils nur einmal vorkommen.

SPS/OPC Communication: Diese Klasse stellt die Methoden "ReadData" und "WriteData" für eine Verbindung zur SPS her. Die Prozessdaten können zur SPS gesendet und von der SPS empfangen werden. Die Kommunikation erfolgt über einen OPC-Server.

Process Data: Daten, die aus dem Prozess ausgelesen werden, werden in den Objekten mit der Kennzeichnung PD abgespeichert (Ist-Zustand, Limits). Ebenso werden die Daten, die an den Prozess gesendet werden, in den Objekten mit der Kennzeichnung PD zwischengespeichert (Stellgrößen; Set).

Control Data: Daten, die vom Prozessingenieur vorgegeben werden, werden in den Objekten mit der Kennzeichnung CD abgespeichert (Grenzwerte, Max, Min, Control-Daten, Fuzzy-Sets, Nutzungsvorgaben von Programmteilen). Diese Daten werden über die Masken des FEOS-Systems eingegeben, der Operator (Schmelzer) hat darauf keinen Zugriff.

Das entwickelte Prozessleitsystem für Elektrolichtbogenöfen zeichnet sich somit dadurch aus, dass alle oben genannten (und ggf. auch weitere) Stoff- und Energieflüsse durch einen (einzigen) Reglerverbund geregelt werden. Damit ist eine einheitliche Benutzerschnittstelle (HMI) gegeben, welche erhebliche Vorteile in der Bedienbarkeit bietet.

Neben der bekannten Steuerung über Fahrdiagramme und den klassischen Regelansätzen ist als weitere Neuerung für jede der Stellgrößen eine auf Fuzzy-Logik basierte Regelung realisiert. Die Fuzzy-Logik-Regler bieten dem Elektrolichtbogenofen-Experten auch ohne weiteren regelungstechnischen Hintergrund die Möglichkeit einer schnellen und zielführenden Optimierung. Auf Grund seines Expertenwissens kann er die linguistischen Variablen und die zugehörigen Regeln klar definieren. Er weiß beispielsweise, wie viel Grad Celsius sich hinter einer "hohen Kühlwassertemperatur" verbergen und wie darauf zu reagieren ist.

Die Wahl des Fuzzy-Algorithmus ist fast beliebig, generell bietet sich die maxprod-Methode an. Ebenso sind Form und Anzahl der jeweiligen Sets beliebig der Aufgabenstellung anpassbar. Zur Erzielung dynamischen Verhaltens können entsprechende, dynamische Größen, wie die Ableitung einer Temperatur, als Eingangsgröße verwendet werden.

Die beschriebene Regelung bietet dem Bediener die Möglichkeit, kontinuierlich mittels des Gewichtungsfaktors F von der Steuerung auf die Regelung umzuschalten. Entsprechend des Gewichtungsfaktors setzt sich der tatsächlich angewandte Stellwert aus den Vorgaben der Steuerung und der Regelung zusammen, wobei Plausibilitätsgrenzen eingehalten werden. Möglich wird dies, da die Regler keinen integrativen Anteil enthalten.

Gemäß dem Erfindungsvorschlag werden also die isolierten Einzelregelungen zu einem Reglerverbund zusammengefasst. Anstelle vieler unterschiedlicher Schnittstellen ist nur eine einzige Bedienerschnittstelle (HMI) vorgesehen. Die Realisierung der Regelung erfolgt mittels der Fuzzy-Logik. Ein gleitender Übergang von einer Steuerung zu einer Regelung, z. B. auch zu der Fuzzy-Logik-Regelung ist durch die einstellbaren Mediatoren sichergestellt.

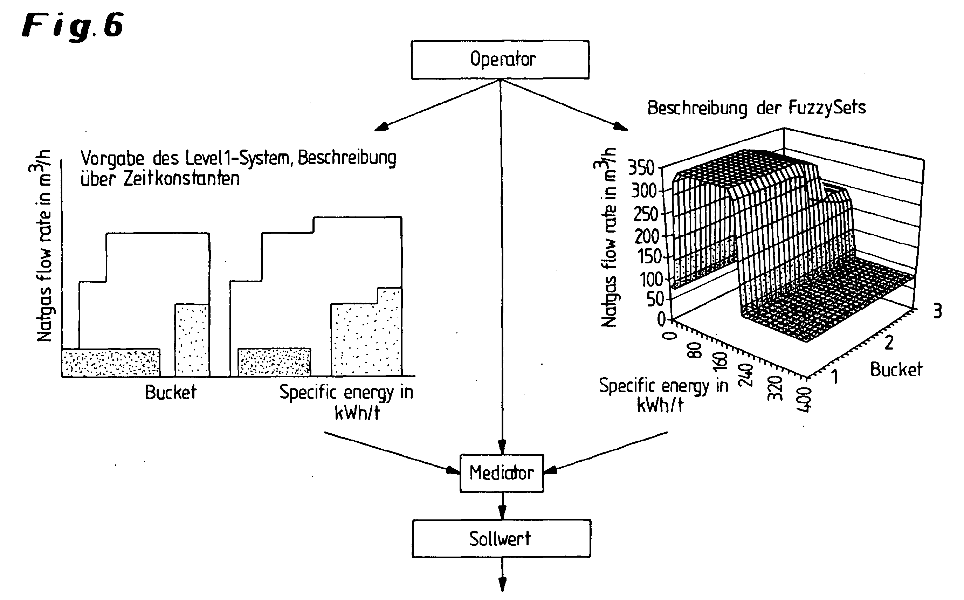

Fig. 6 zeigt hierzu schematisch die funktionale Beschreibung der im Ofen stattfindenden Prozesse über die Vorgabe des Level1-Sytems und der Beschreibung über Zeitkonstanten (auf der linken Seite) und die Beschreibung der Fuzzy-Sets (Definition von Fuzzy-Elementen) und ihr Einflussgrad (auf der rechten Seite) sowie die daraus resultierende Spezifikation der Einflussparameter im Mediator (dort: Wichtung des Einflusses der unterschiedlichen Regelkonzepte; abschließend generierter Sollwert aus dem gewichteten Mittel beider Regelungskonzepte). Hieraus wiederum resultieren die Sollwerte (Stellgrößen) des Regelkreises.

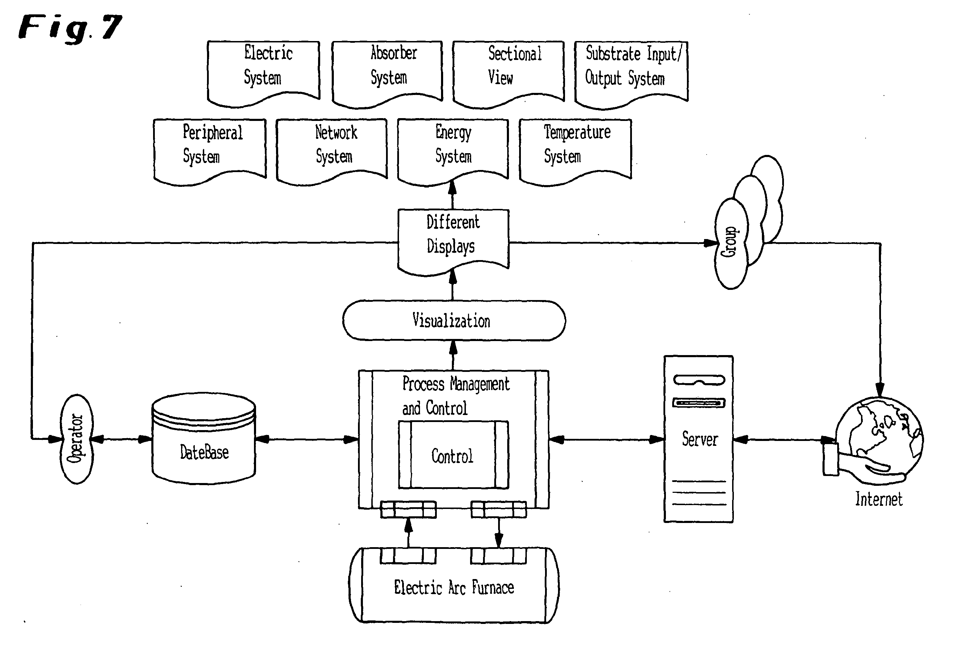

In Fig. 7 ist schematisch die Einbindung des Regelungssystems ("Control") des Ofens ("Electric Arc Furnace") in eine Umgebung, durch die die benötigten Daten für den Betrieb des Systems zur Verfügung gestellt werden.

Bezugszeichenliste:

| | |
|---|---|
| 1 | Regelung |
| 2 | Elektrolichtbogenofen |
| 3 | Gefäß |
| 4 | aufzuschmelzendes Metall |
| 5 | Elektrode |
| 6 | Brenner |
| 7 | Brenner |
| 8 | Brenner |
| 9 | konventionelle Steuerungs- oder Regeleinheit |
| 10 | Fuzzy-Regeleinheit |
| 11 | Mediator |

| | |
|---|---|
| St | Stellgröße |
| $St_K$ | konventionelle Stellgröße |
| $St_F$ | Fuzzy-Stellgröße |
| F | Mediator-Faktor |

**Patentansprüche**

1. Verfahren zum Betreiben eines schmelzmetallurgischen Ofens (2), insbesondere eines Lichtbogenofens, bei dessen Betrieb eine Anzahl' Betriebsparameter innerhalb vorgegebener Grenzen gehalten werden, wobei hierfür eine Steuerung- oder Regelungseinrichtung (1) zur Anwendung kommt,
   **dadurch gekennzeichnet,**
   **dass** die Steuerungs- oder Regelungseinrichtung (1) eine konventionelle Steuerungs- oder Regeleinheit (9) und eine Fuzzy-Regeleinheit (10) aufweist, die jeweils ihre Stellgrößen ($St_K$, $St_F$) an mindestens einen programmierbaren Mediator (11) leiten, wobei der Mediator (11) das zur Anwendung kommende Stellsignal gemäß einem vorgegebenen Gewichtungsfaktor (F) aus der von der konventionellen Steuerungs- oder Regeleinheit (9) und der von der Fuzzy-Regeleinheit (10) stammenden Stellgröße errechnet.

2. Verfahren nach Anspruch 1,
   **dadurch gekennzeichnet,**
   **dass** der geregelte Betriebsparameter die Intensität eines Brenners ist, mit dem Material in dem Ofen (2) erhitzt wird.

**3.** Verfahren nach Anspruch 1, **dadurch gekennzeichnet, dass** der geregelte Betriebsparameter die Leistungsaufnahme eines Lichtbogens ist, mit dem Material in dem Ofen (2) erhitzt wird.

**4.** Verfahren nach Anspruch 1, **dadurch gekennzeichnet, dass** der geregelte Betriebsparameter die Reaktanz einer Zuführleitung einschließlich Drossel zu einem Lichtbogen ist, mit dem Material in dem Ofen (2) erhitzt wird.

**5.** Verfahren nach Anspruch 1, **dadurch gekennzeichnet, dass** der geregelte Betriebsparameter die Intensität eines Nachbrenners ist, mit dem Material in dem Ofen (2) erhitzt wird.

**6.** Verfahren nach Anspruch 1, **dadurch gekenntzeichnet,** dass der geregelte Betriebsparameter ein Parameter ist, der mit der Menge an Schaumschlacke korreliert, die sich in dem Ofen (2) befindet.

**7.** Verfahren nach Anspruch 1; **dadurch gekennzeichnet, dass** als geregelter Betriebsparameter die Menge eines in ein Heizelement des Ofens (2) eingebrachten Gases herangezogen wird.

**8.** Verfahren nach Anspruch 1, **dadurch gekennzeichnet, dass** als geregelter Betriebsparameter die Menge des zugegebenen Eisens herangezogen wird.

**9.** Verfahren nach einem der Ansprüche 2 bis 8, **dadurch gekennzeichnet, dass** mindestens zwei der geregelten Betriebsparameter in einer einzigen Regelung (1) verarbeitet werden.

**10.** Schmelzmetallurgischer Ofen (1), insbesondere Lichtbogenofen, bei dessen Betrieb eine Anzahl Betriebsparameter mittels einer Steuerung- oder Regelungseinrichtung (1) innerhalb vorgegebener Grenzen gehalten werden, insbesondere zur Durchführung des Verfahrens nach einem der Ansprüche 1 bis 9, **dadurch gekennzeichnet, dass** die Steuerungs- oder Regelungseinrichtung (1) eine konventionelle Steuerungs- oder Regeleinheit (9) und eine Fuzzy-Regeleinheit (10) aufweist, wobei beide Regeleinheiten (9, 10) mit mindestens einem programmierbaren Mediator (11) verbunden sind, der zur Berechnung des zur Anwendung kommenden Stellsignals gemäß einem vorgegebenen Gewichtungsfaktor (F) aus der von der konventionellen Steuerungs- oder Regeleinheit (9) und der von der Fuzzy-Regeleinheit stammenden Stellgröße geeignet ist.

**11.** Ofen nach Anspruch 10, **dadurch gekennzeichnet, dass** jedem geregelten Betriebsparameter ein eigener Mediator (11) zugeordnet ist.

## Claims

**1.** Method of operating a melt-metallurgical furnace (2), particularly an arc furnace, in the operation of which a number of operating parameters are kept within predetermined limits, wherein a control or regulating device (1) is used for this purpose, **characterised in that** the control or regulating device (1) comprises a conventional control or regulating unit (9) and a fuzzy-logic regulating unit (10), which each feed their setting magnitudes ($St_K$, $St_F$) to at least one programmable mediator (11), wherein the mediator (11) calculates the setting signal, which is used, in accordance with a predetermined weighting factor (F) from the setting magnitudes originating from the conventional control or regulating unit (9) and from the fuzzy-logic regulating unit (10).

**2.** Method according to claim 1, **characterised in that** the regulated operating parameter is the intensity of a burner by which material in the furnace (2) is heated.

**3.** Method according to claim 1, **characterised in that** the regulated operating parameter is the power consumption of an arc by which the material in the furnace (2) is heated.

**4.** Method according to claim 1, **characterised in that** the regulated operating parameter is the reactance of a feed line inclusive of choke to an arc by which the material in the furnace (2) is heated.

**5.** Method according to claim 1, **characterised in that** the regulated operating parameter is the intensity of an afterburner by which the material in the furnace (2) is heated.

**6.** Method according to claim 1, **characterised in that** the regulated operating parameter is a parameter correlated with the quantity of foamed slag located in the furnace (2).

**7.** Method according to claim 1, **characterised in that** the amount of a gas introduced into a heating element of the furnace (2) is utilised as regulated operating parameter.

**8.** Method according to claim 1, **characterised in that** the amount of supplied iron is utilised as regulated operating parameter.

**9.** Method according to any one of claims 2 to 8, **characterised in that** at least two of the regulated operating parameters are processed in a single regulation (1).

**10.** Melt-metallurgical furnace (1), particularly arc furnace, in the operation of which a number of operating parameters are kept within predetermined limits by means of a control or regulating device (1), particularly for performance of the method according to any one of claims 1 to 9, **characterised in that** the control or regulating device (1) comprises a conventional control or regulating unit (9) and a fuzzy-logic regulating unit (10), wherein the two regulating units (9, 10) are connected with at least one programmable mediator (11) suitable for calculation of the setting signal, which is used, in accordance with a predetermined weighting factor (F) from the setting magnitudes originating from the conventional control or regulating unit (9) and from the fuzzy-logic regulating unit.

**11.** Furnace according to claim 10, **characterised in that** an individual mediator (11) is associated with each regulated operating parameter.

**Revendications**

**1.** Procédé pour faire fonctionner un four de fusion en métallurgie (2), notamment un four à arc, pendant le fonctionnement duquel on maintient un nombre de paramètres de fonctionnement dans des limites prédéfinies, un système de commande ou de réglage (1) étant utilisé à cet effet,
**caractérisé en ce que**
le système de commande ou de réglage (1) comporte une unité de commande et de réglage conventionnelle (9) et une unité de réglage floue (10) qui acheminent chacune leurs variables de réglage ($St_K$, $St_F$) vers au moins un médiateur (11) programmable, le médiateur (11) calculant le signal de réglage qui va être utilisé selon un coefficient de pondération (F) prédéfini à partir de la variable de réglage émanant de l'unité de commande et de réglage conventionnelle (9) et de l'unité de réglage floue (10).

**2.** Procédé selon la revendication 1,
**caractérisé en ce que** le paramètre de fonctionnement réglé est l'intensité d'un brûleur, avec lequel de la matière est échauffée dans le four (2).

**3.** Procédé selon la revendication 1,
**caractérisé en ce que** le paramètre de fonctionnement réglé est la puissance absorbée d'un arc électrique, avec lequel de la matière est échauffée dans le four (2).

**4.** Procédé selon la revendication 1,
**caractérisé en ce que** le paramètre de fonctionnement réglé est la réactance d'un conduit d'alimentation, y compris le restricteur vers un arc électrique, avec lequel de la matière est échauffée dans le four (2).

**5.** Procédé selon la revendication 1,
**caractérisé en ce que** le paramètre de fonctionnement réglé est l'intensité d'un post-brûleur, avec lequel de la matière est échauffée dans le four (2).

**6.** Procédé selon la revendication 1,
**caractérisé en ce que** le paramètre de fonctionnement réglé est un paramètre qui est en corrélation avec la quantité de laitier mousseux qui se trouve dans le four (2).

**7.** Procédé selon la revendication 1,
**caractérisé en ce qu'**on implique en tant que paramètre de fonctionnement réglé la quantité du gaz introduit dans un élément de chauffage du four (2).

**8.** Procédé selon la revendication 1,
**caractérisé en ce qu'**on implique en tant que paramètre de fonctionnement réglé la quantité du fer ajouté.

**9.** Procédé selon l'une quelconque des revendications 2 à 8,
**caractérisé en ce qu'**au moins deux des paramètres de fonctionnement réglés sont traités dans un système de réglage unique (1).

**10.** Four de fusion métallurgique (1), notamment four à arc, pendant le fonctionnement duquel un nombre de paramètres de fonctionnement sont maintenus dans des limites prédéfinies au moyen d'un système de commande ou de réglage (1), notamment pour la réalisation du procédé selon l'une quelconque des revendications 1 à 9,
**caractérisé en ce que** le système de commande ou de réglage (1) comporte une unité de commande et de réglage conventionnelle (9) et une unité de réglage floue (10), les deux unités de réglage (9, 10) étant reliées à au moins un médiateur (11) programmable qui est apte au calcul du signal de réglage qui va être utilisé selon un coefficient de pondération (F) prédéfini à partir de la variable de réglage émanant de l'unité de commande et de réglage conventionnelle (9) et de l'unité de réglage floue.

**11.** Four selon la revendication 10,
**caractérisé en ce qu'**un propre médiateur (11) est

**EP 2 067 378 B1**

affecté au paramètre de fonctionnement réglé.

**Fig.1**

Regelalgorithmus
Brenner

Stellgröße =

Stellgröße$_{konventionell}$ * Mediator +

Stellgröße$_{fuzzy}$ * (1-Mediator)

Stellgröße
Brenner 1

$St_K$

$St_F$
Stellgröße
Brenner 2

St

Stellgröße
Brenner 3

Zustandsgrößen
Brenner 1

Zustandsgrößen
Brenner 2

Zustandsgrößen
Brenner 3

Regelparameter Brenner 1
Fuzzyparameter Brenner 1
Mediator Brenner 1

Regelparameter Brenner 2
Fuzzyparameter Brenner 2
Mediator Brenner 2

Regelparameter Brenner 3
Fuzzyparameter Brenner 3
Mediator Brenner 3

EP 2 067 378 B1

*Fig.2*

Process START | Power Control | Reactor Control | Burner Control | FoamingSlag Control | PostCombustion Control | Oxygen Control | DRI Control

**ProcessData | Power**

Power | InjectionSystem | CoolingSystem | OffGas | Sonic | General

powerInElectrode10n
powerInElectrode20n
powerInElectrode30n

electrode1Top
electrode2Top
electrode3Top
electrode1Bottom
electrode2Bottom
electrode3Bottom

currentElectrode1SetHigh
currentElectrode2SetHigh
currentElectrode3SetHigh

reactorTapStatus
reactorTapFDS
reactorTapManual
reactorTapActual dC
reactorTapLevel1Set dC
reactorTapSet

voltageElectrode1Actual dC
voltageElectrode2Actual dC
voltageElectrode3Actual dC

currentElectrode1Actual dC
currentElectrode2Actual dC
currentElectrode3Actual dC

transformerTapStatus
transformerTapFDS
transformerTapManual
transformerTapActual dC
transformerTapLevel1Set dC
transformerTapSet

voltageElectrode1Level1Set dC
voltageElectrode2Level1Set dC
voltageElectrode3Level1Set dC

currentElectrode1Level1Set dC
currentElectrode2Level1Set dC
currentElectrode3Level1Set dC

electrode1Position dC
electrode2Position dC
electrode3Position dC

EnergieSpecific dC
electricalPowerActual dC

activePowerElectrode1Actual dC
activePowerElectrode2Actual dC
activePowerElectrode3Actual dC

**Fig. 3**

EP 2 067 378 B1

| Process START | Power Control | Reactor Control | Burner Control | FoamingSlag Control | PostCombustion Control | Oxygen Control | DRI Control | | |

**ProcessData** | **InjectorSystem Burner**

| Power | InjectorSystem | CoolingSystem | OffGas | Sonic | General |

Burner(1) Burner(2) Burner(3)

- PilotFlameStatus
- Status
- StatusOff
- FBOS
- Lambda LevelSet
- dC
- Oxygen FlowRateActual
- dC
- Oxygen FlowRateLevelSet
- dC
- Oxygen SumLevelSet
- dC
- Oxygen FlowRateSet
- Oxygen SumSet
- NatGas FlowRateActual
- dC
- NatGas FlowRateLevelSet
- dC
- NatGas SumLevelSet
- dC
- NatGas FlowRateSet
- NatGas SumSet
- Burner EnergyActual
- Burner EnergyTotal

| Burner | Carbon | Oxygen | PCOxygen | DRI |

# Fig.4

Controller — Verwaltung der einzelnen Teilregelungen

+Calculate() — Methode zum Starten der Berechnungen in den einzelnen Regelalgorithmen

ProcessData — Istzustand des Ofens / Stellgrößen für den Ofen

ControlData — Regelparameter

BurnerControl
+Calculate()
«read/write» «read»

PowerControl
+Calculate()
«read/write» «read»

ReactorControl
+Calculate()
«read/write» «read»

DRIControl
+Calculate()
«read/write» «read»

PostCombastionControl
+Calculate()
«read/write» «read»

FoamingSlagControl
+Calculate()
«read/write» «read»

OxygenControl
+Calculate()
«read/write» «read»

«interface»
Control

Calculate()

FuzzyController

+FuzzyController(Parameter)
+Calculate()

Fuzzy-Controller, der spezifisch über den Mediator an die konventionellen Regelalgorithmen gekoppelt wird

Lese / Schreibzugriff

Lesezugriff

Regelalgorithmen 1...n

**Fig.5**

Zentrale Steuereinheit für das Prozessleitsystem

Hinterlegung der Ofenkonfiguration in XML-Datenstrukturen

Ruft die Teilregelungen auf und startet diese; Verwaltung der Regelalgorithmen

Regelalgorithmen 1...n;

Hinterlegung der Regelparameter in XML-Datenstrukturen

1. Einlesen des Ofenzustandes aus SPS
2. Algorithmen schreiben Stellgrößen in Prozessdaten, Stellgrößen werden anschließend an SPS gesendet

Entkopplung der Visualisierung von der Datenverarbeitung

Entkopplung der Datenspeicherung von der Datenverarbeitung

FurnaceConfig

«file» XMLFEOSConfig.xml

«interface» Control

ProcessManager

Controller

C

Fuzzy

ProcessTimer

SPS

«interface» Observable

ProcessData

ControlData

«file» XMLControlData.xml

HMI-Main

StoreProDat

«file» PDLogxxxxxx.txt

ViewProDat

HMI-ViewPD

sd Name

«interface» Observer

sd Name

«interface» DatViewPD

«component» Hauptfenster

«component» Beobachter

«component» Prozess-Timer

«component» Prozess-Management

Fig.6

# Fig.7

| Electric System | Absorber System | Sectional View | Substrate Input/ Output System |
| --- | --- | --- | --- |

| Peripheral System | Network System | Energy System | Temperature System |
| --- | --- | --- | --- |

Different Displays

Group

Visualization

Process Management and Control

Control

Operator

DateBase

Server

Internet

Electric Arc Furnace

EP 2 067 378 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5205979 A
- WO 0228146 A1
- DE 19711453 A1
- EP 0036122 B1
- DE 4415727 A1
- WO 02063927 A
- WO 9923264 A